# EUROPEAN PATENT APPLICATION

(11) **EP 3 016 237 A1**
(43) Date of publication of application: **04.05.2016**
(21) Application number: 14817821.3
(22) Date of filing: 24.06.2014
(51) Int. Cl.: H02J 7/02, B60L 11/18, H01M 2/10, H01M 10/44, H01M 10/48, H02J 3/00

(54) **METHOD FOR CONTROLLING CHARGING POWER, SYSTEM FOR CONTROLLING CHARGING POWER, AND PROGRAM**

(30) Priority: 25.06.2013 JP 2013132764
(71) Applicant: NEC Corporation, Tokyo 108-8001 (JP)
(72) Inventor: SHIZUNO, Takayuki, Tokyo 108-8001 (JP); OHTA, Yuko, Tokyo 108-8001 (JP)
(74) Representative: Vossius & Partner Patentanwälte Rechtsanwälte mbB
(86) International application number: PCT/JP2014/066727
(87) International publication number: WO 2014/208565

(57) **Abstract**

To provide a charging power control method which charges a storage battery and in which an "limit value" and a "requested power" are set in advance, the charging power control method including: a step of measuring an effective value of power used by the storage battery being charged; a step to determining whether or not the measured effective value monotonically decreases; a step of, when the effective value monotonically decreases, resetting the limit value and the value of the requested power to, for example, a value equal to the effective value; a step of storing the reset limit value and the reset requested power; a step of, thereafter, continuing the charging of the storage battery at the reset limit value; a step of performing the limited charging during charging of the storage battery; and a step of, after finish of the limited charging, resuming charging by setting the limit value to the stored value of the requested power.

## Description

### TECHNICAL FIELD

The present invention relates to a charging power control method, a charging power control system and a program which charge a storage battery in charging equipment provided with one or more chargers, and more particularly, to a charging power control method, a charging power control system and program which are capable of efficiently charging storage batteries by controlling charging power according to changing states of the storage batteries.

### BACKGROUND ART

Various systems have been proposed recently for achieving a business model of receiving payments by setting a charger for charging electric vehicles or the like and providing charge service. Time for charging an electric vehicle depends on the specifications of the secondary battery and the performance of the charger, as a matter of course. In general, however, in the case of so-called fast charging, the charging time is several tens of minutes, and in the case of normal charging, the charging time is about several hours.

For example, Patent Document 1 discloses a technique for use in a system which is provided with a plurality of chargers for charging an electric vehicle, an apparatus connected to the chargers, and the like, and in which, after resources available therein are monitored, the amount of power to be allocated to each of the chargers is determined, and then each of the chargers is operated.

### CITATION LIST

### PATENT DOCUMENT

Patent Document 1: WO2012/118184

### SUMMARY OF INVENTION

### TECHNICAL PROBLEM

However, Patent Document 1 describes the operation when the resources are static, but describes that fixed maximum values are used when the resources are dynamically changed. Therefore, there is a room for improvement from the viewpoint of power efficiency.

Further, here, the technique is described by taking an electric vehicle as an example. However, from the viewpoint of performing efficient charging, it is preferred that the charging be efficiently performed also when storage batteries other than electric vehicle batteries are charged.

Therefore, an object of the present invention is to provide a charging power control method, a charging power control system and program, which are capable of efficiently charging storage batteries by controlling charging power according to the charging state of the storage batteries.

### SOLUTION TO PROBLEM

In order to achieve the above-described object, as an embodiment according to the present invention, there is provided a charging power control method, as follows:
a charging power control method for charging a storage battery in charging equipment provided with one or more chargers, wherein a maximum power value (hereinafter referred to as "limit value") usable for charging by a single charger, and power (hereinafter referred to as "requested power") originally desired to be used for charging the storage battery during charging are set in advance, the charging power control method comprises steps of
   A1: starting charging of a storage battery at a predetermined initial power set in advance,
   A2: measuring an effective value of power used by the storage battery being charged,
   A3: determining whether or not the measured effective value monotonically decreases,
   A4: a step in which, when the effective value monotonically decreases, the limit value and the value of the requested power are reset to a value which is equal to the effective value, or a value which is higher than the effective value by a predetermined value and is lower than an initial value of the limit value or the requested power,
   A5: storing the reset limit value and the reset requested power,
   A6: thereafter, continuing the charging of the storage battery at the reset limit value,
   A7: performing charging (hereinafter referred to as "limited charging") at a limit value lower than the present requested power during charging of the storage battery, and
   A8: resuming charging, after finish of the limited charging, by setting the limit value to the stored value of the requested power.

### (Definition of terms)

Examples of "storage batteries" include an electric vehicle storage battery (secondary battery), and the like, but are not limited to this, and may include storage batteries for use in other applications.

"Requested power" means power originally desired to be used during charging of a storage battery (for example, an electric vehicle storage battery). However, the initial value of requested power is, for example, a specification value of a charger (for example, the maximum charging power of the charger).

"Effective value" means power (that is, the effective value of power of a storage battery being charged) being used by the storage battery (for example, an electric vehicle storage battery).

"Limit value" means a value of power usable for charging a storage battery (for example, an electric vehicle storage battery), that is, means a value of power usable for charging a storage battery by a charger. The initial value may be, for example, equal to or substantially equal to the value of requested power.

"Charging power control apparatus" means a computer capable of performing a charging state management method according to the embodiment of the present invention, and includes, for example, a server, and the like. A charging state management apparatus may be configured by a single computer, or may be configured by a plurality of computers.

### ADVANTAGEOUS EFFECTS OF INVENTION

According to the present invention, it is possible to provide a charging power control method, a charging power control server, and a program, which are capable of efficiently charging storage batteries by controlling charging power according to the charging state of the storage batteries.

### BRIEF DESCRIPTION OF DRAWINGS

Figure 1 is a view schematically showing a power storage charging system of an embodiment of the present invention.
Figure 2 is a block diagram showing a schematic configuration of a charger.
Figure 3A is a view showing a charging pattern when limited charging is not performed.
Figure 3B is a view showing a charging pattern when the limited charging is performed and then normal charging is again performed.
Figure 4 is a flow chart showing an example of charging operation.

### DESCRIPTION OF EMBODIMENTS

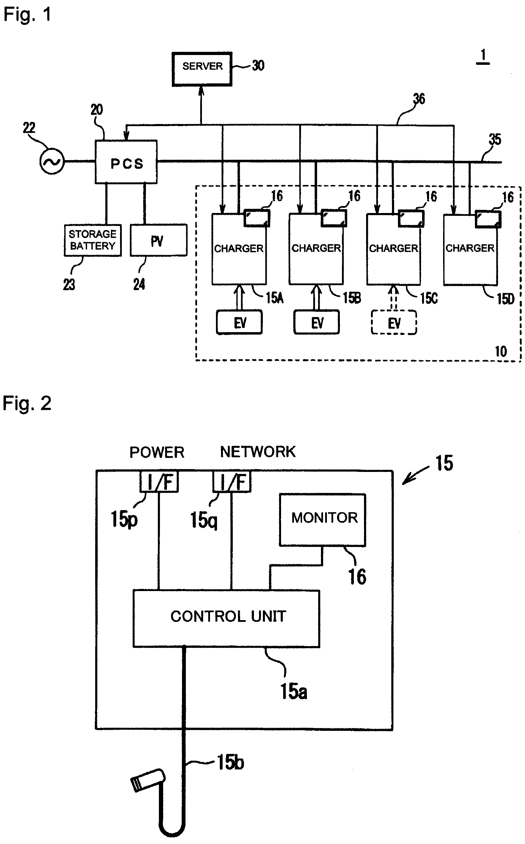

An embodiment according to the present invention will be described with reference to the accompanying drawings. It should be noted that configurations, functions, operations, and the like, described below relate to an embodiment of the present invention and are not intended to limit the present invention. Figure 1 is a view schematically showing a power storage charging system according to an embodiment of the present invention.

A power storage charging system 1 includes a storage battery 23 and a solar power generator 24 for example. The power storage charging system 1 includes: a PCS (Power Conditioner System) 20 which receives electric power from system power 22 and the like to supply the power to predetermined apparatuses in the power storage charging system 1; charging equipment 10 which has a plurality of chargers 15A to 15D to charge electric vehicles (EVs); and a charging power control server 30 which controls the operation of each of the chargers 15A to 15D. Further, although not shown, a plurality of loads, such as shops and homes, may also be connected to a distribution network 35.

The charging equipment 10 is not specifically limited and, for example, may be a charging station, and the like, provided in a shopping facility, a service area, and the like. Number of the chargers 15A to 15D provided in the charging equipment 10 is not limited to four, and may be two or three or may be five or more. The configuration of the chargers 15A to 15D will be described below with reference to other drawings.

The PCS (Power Conditioner System) 20, which is also referred to as a power conditioner, a power controller, or the like, has a function of converting AC power into DC power, and a function of supplying power from the system power, or the like, to the chargers 15A to 15D or loads (not shown) of stores, houses, and the like. It should be noted that, in Figure 1, only one PCS 20 is shown, but two or more PCSs may also be provided.

The PCS 20 may be configured to perform two-way communication with the outside via the predetermined network 35.

Power supply means connected to the PCS 20 is not limited in particular, and the system power 22, one or more of the storage batteries 23, the solar power generator 24, a wind power generator, or the like, may be connected to the PCS 20. Of course, one or more of these may be combined to be connected to the PCS 20.

In the present embodiment, for example, the four chargers 15A to 15D are provided in the charge institution 10. The chargers 15A to 15D may be the identical products or may be a combination of different products. However, in the following description, it is assumed that the chargers 15A to 15D are the same products, and the chargers 15A to 15D may only be represented as a "charger 15". The charger 15 is, for example, a fast charger, and supplies power to an electric vehicle to charge the storage battery of the electric vehicle.

As schematically shown in the block diagram of Figure 2, the charger 15 may include a control unit 15a which controls the operation, and the like, of the charger, a feeding cable 15b connected to a charging connection unit of the electric vehicle, a monitor 16 (display device) which displays predetermined information to a user, and the like. A communication line (not shown) may be incorporated in the feeding cable 15b, and the control unit 15a may be configured to perform predetermined information communication with an ECU (Electric Control Unit) of the electric vehicle through the communication line.

Further, the charger 15 includes a power interface unit 15p, a communication interface 15q, and the like. The charger 15 may have any outer shape, and for example, may be configured such that the control unit 15a, and the like, is incorporated in a vertical type housing, and such that the monitor 16 is arranged at a portion of the housing.

Any normal display may be used as the monitor 16, and a touch panel display, and the like, may also be used as the monitor 16.

For example, the control unit 15a may be configured to perform some or all of the following operations:
- charging by a constant current/ constant voltage control method,
- displaying, on the monitor 16, a status (for example, charging rate) during charging,
- performing predetermined data communication with an electric vehicle connected to the control unit 15a,
- performing predetermined data communication with the charging power control server 30 connected to the control unit 15a,
- measuring an effective value of power used by the storage battery of the electric vehicle (or, obtaining information on the effective value from the outside),
- transmitting data relating to the amount of power currently being used for charging to the outside, and the like.

It should be noted that the transmission of the data to the outside, and the like, may be performed at a predetermined timing, or may also be performed at an arbitrary timing according to a transmission request from the outside.

In the charger 15, the value of power supplied to the electric vehicle may be selected from among values, such as 10 kW, 20 kW, 30 kW, 40 kW and 50 kW, which are set stepwise, or may be set to any value. The specification value of the charger 15 (maximum value of power used for charging the electric vehicle) is determined in advance according to the performance of the charger. For example, there are chargers whose specification values are respectively set to 20 kW, 40 kW, 50 kW, and the like.

The electric vehicle may be a plug-in hybrid vehicle, and the like, in addition to a battery-powered electric vehicle. The storage battery of the electric vehicle is not limited in particular, but a lithium ion secondary battery, and the like, can be suitably used.

The charging power control server 30 is a computer having a CPU, a memory, a storage device (for example, a hard disk, or the like), an input and output interface, and the like, and performs predetermined operations according to a computer program installed in the computer. It should be noted that the program may be stored in the server 30 via the network, or may be a program which is stored in a storage medium and which is read into the server 30 and stored in the server 30.

The charging power control server 30 may have a part or all of functional units that are realized by the computer program and are described below:
(1) a determination processing unit which determines whether or not the effective value of power used by the storage battery of the electric vehicle being charged monotonically decreases;
(2) a reset processing unit in which, when the effective value monotonically decreases, the "limit value" and the value of "requested power" are reset to a value equal to the effective value, or a value which is higher than the effective value by a predetermined value and is lower than an initial value of the limit value or the requested power;
(3) a storage processing unit which stores the reset limit value and the reset value of requested power in a storage device;
(4) a charging restart processing unit which transmits, to the charger, an instruction such that, during charging of the electric vehicle, the charger performs charging (limited charging) at a limit value lower than the present requested power, and such that, after finish of the limited charging, the charger resumes charging by setting the limit value to the stored value of the requested power.

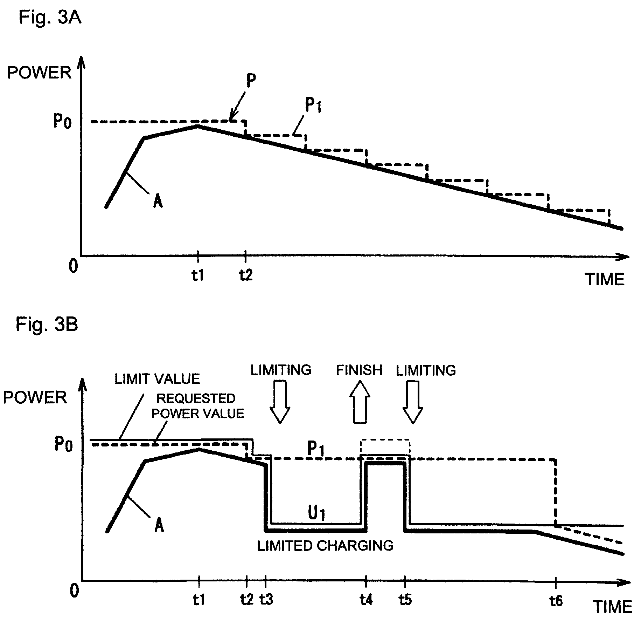

It should be noted that, in Figure 1, only one charging power control server 30 is drawn, but the charging power control method according to the present invention can also be realized by distributed processing using a plurality of computers. Further, in the above description, the charging power control server 30 having processing units, such as (1) to (4), is exemplified, but a part of the processing units may be provided in the charger 15 and/or the PCS 20. That is, in an embodiment of the present invention, it is important that the charging shown in Figure 3B (details described below) can be performed in the power storage charging system 1. For realizing the charging, the allocation of the processing units to the respective apparatuses is not limited in particular.

Next, operation of the power storage charging system 1 having the above-described configuration will be described, and in particular, the operation of the charging equipment 10 will be mainly described. Specifically, the operation when one charger 15A charges an electric vehicle will be described.

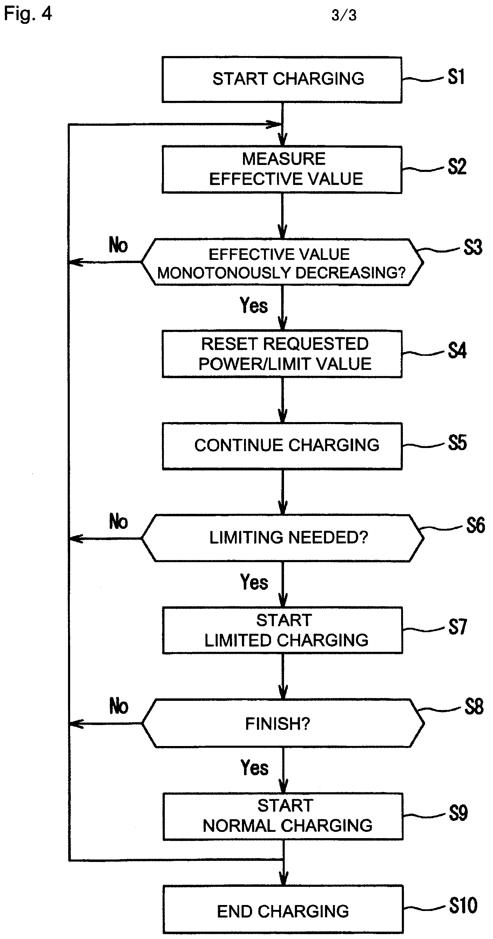

Figure 3A is a view showing a charging pattern at the time when the limited charging (details described below) is not performed. Figure 3B is a view showing a charging pattern at the time when the limited charging (details described below) is performed, and thereafter, the normal charging is again performed. Figure 4 is a flow chart showing an example of the charging operation.

First, in step S1, charging of an electric vehicle is started under the following conditions. That is, in step S1, charging is performed by a constant-current constant-voltage method, and further, the charging power at this time is an initial value Po. The initial value Po is, for example, a specification value (for example, 30 kW, or the like) of the charger 15A. As shown in Figure 3B, in this example, the limit value set for the charger 15A (the value of power which can be used by the charger) is set equal to or substantially equal to the initial value Po.

It should be noted that, as a trigger for starting the charging by the charger 15A, input by a user using the charger 15A (for example, an operation such as touching a start button, or the like, on the touch-panel monitor 16, or pushing a predetermined physical button of the charger) may be used. The data, such as a specification value (for example, 30 kW), of the charging voltage of the charger 15A may be transmitted to the charging power control server 30 and stored in the charging power control server 30. The transmission of data to the charging power control server 30 may be performed before the start of charging or after the start of charging.

In step S1 when the charging is started, then in step S2, an effective value A of power used by the storage battery during charging is measured. The measurement of the effective value may be periodically performed at predetermined time intervals. It should be noted that, in Figure 3A and Figure 3B, it is illustrated that the effective value A monotonically increases during the time from the start of charging until the time t1.

Next, in step S3, it is determined whether or not the effective value A of power used by the storage battery monotonically decreases. For example, in step S3, the charging power control server 30 receives, from the charger 15A, data about the effective value A of power used by the storage battery of the electric vehicle, and the charging power control server 30 performs step S3 on the basis of the effective value data. The determination may be performed, for example, by using a moving average for the effective value A. Figure 3A shows an example in which the effective value A decreases monotonically after the time t₁.

When the effective value A does not decrease monotonically, the charging at the initial value of the limit value is continued. On the other hand, when it is determined in step S3 that the effective value A monotonically decreases, the process moves to step S4. In step S4, the requested power is reset to a value P₁ (which is, however, lower than the initial value Po) so that the value of requested power is equal to or slightly higher than the measured effective value A.

In the example of Figure 3A and Figure 3B, the resetting of the requested power is performed at time t₂. It should be noted that the value of requested power may be set to a value which is higher by 1 to 10 kW than the effective value A, or may be set to a value which is higher by 2 to 5 kW than the effective value A. Further, Figure 3A shows an example in which the requested power is reduced stepwise, but the requested power may be continuously reduced along the inclination of the effective value A.

Further, the limit value of the charger 15A is also reset to a value equal to or substantially equal to the above-described reset value of the requested power (Step S4). This resetting of the limit value may be performed simultaneously with the resetting of the requested power at the time t2, or may be performed before or after the resetting of the requested power. That the limit value is "substantially equal to the requested power" means, for example, that the limit value may be higher than the value of requested power by about several kilowatts.

That the requested power, and the like, is reset to a value lower than the initial value (or the value before the present time) in this way, means that the power subsequently required for the charger 15A to charge the electric vehicle is reduced. Therefore, the surplus power can be used for the other chargers, and thereby the power can be efficiently used in the charging equipment as a whole.

The requested power and the limit value, which are reset as described above, are stored in a predetermined storage device. Specifically, the data relating to the requested power and the limit value may be stored in the charging power control server 30. Alternatively, the data may also be stored in a storage unit (not shown) in the charger 15A.

After the requested power and the limit value are reset in step S4, the charger 15A continues the charging at the reset limit value in step S5. This operation corresponds to the operation after the time t2 in Figure 3A and Figure 3B.

Then, while the charging is continued, it is determined, in step S6, whether or not the limited charging needs to be performed. The "limiting" of the charging power is caused, for example, when the power used by a load (for example, a store or a house) connected to the power network 35 is temporarily increased, or when the amount of power supply from PCS 20 is temporarily reduced.

Whether the limited charging needs to be performed or not may be determined, for example, by the PCS 20. Alternatively, whether the limited charging needs to be performed or not may also be determined by the charging power control server 30 or by a management server (not shown).

In Figure 3B, when the limiting is performed, the limit value U₁ is set as the upper limit value of available power. The limit value U₁ is a value which is lower than the requested power P₁, and which is higher than the minimum value of power required for charging the electric vehicle.

When it is determined that the limited charging needs to be performed, the limited charging is performed in step S7. Specifically, in this example, the charging is performed from the time t3 to the time t4 in the state in which the value of power of the charger 15A is limited to the limit value U₁.

While the limited charging is performed, it is determined, in step S8, whether or not the limited charging can be finished. For example, when the event causing the start of the limited charging is resolved, it is determined that the limited charging may be finished. The determination of whether or not the limited charging can be finished may be performed, for example, by the PCS 20. Alternatively, the determination may be performed by the charging power control server 30 or by the management server (not shown).

It should be noted that, when the limited charging is started, the log for the moving average for determining whether or not the effective value monotonically decreases may be cleared. Basically, the requested power is not updated during the limited charging, and further, the determination of the monotone decrease may be temporarily stopped.

After the limited charging is finished, the process again returns to the normal charging as shown in Figure 3B (step S9). A characteristic of the present embodiment is that, in step S9, the charging is performed in such a manner that the limit value is not returned to the initial value (Po), but the limit value is reset to a value of the reset requested power, which value is lower than the initial value.

These steps may be performed, for example, such that the charging power control server 30 stores the limit value and/or the requested power P₁ before the limited charging is started, and such that the charging power control server 30 sends, to the charger 15A, an instruction that the charging is to be resumed at the reset limit value.

Figure 3B exemplifies a state in which the limited charging is again started at time t5, but of course, the charging in step S9 may be continued as it is. Further, the steps of step S2 to step S5, and the like, (the step of determination of the monotonous decrease, and the like, see the flow chart) may be performed during charging operation.

After the charging is performed for a predetermined period of time, or when an operation to end the charging is performed by the user, the charging of the electric vehicle is ended according to a conventional method (step S10). According to the series of operations described above, the charging of the electric vehicle can be performed by the charger.

In the charging power management method of the present embodiment as described above, the requested power before the limited charging is stored in the system. Then, after the limited charging is finished, the limit value is not set to the initial value but is set to the value of the reset requested power, and then the normal charging is resumed. Since the reset limit value is set to be equal to or more than the value of power originally desired to be used for charging the electric vehicle, it is possible to reduce waste of power resources while maintaining the charging performance.

In the system having a plurality of chargers as in the present embodiment, the power supplied to the plurality of chargers is usually controlled so that the sum of the "limit values" respectively set to the chargers does not exceed the value of power which can be supplied to each of the chargers. In this case, for example, when the limit value of one of the chargers is unnecessarily high, there is a possibility that the limit values of the other chargers must be set to be low so that the charging time of each of the other chargers is increased. On the other hand, since, in the present embodiment, the limit value is reset to a lower value, it is possible to prevent the occurrence of the above-described problem.

As described above, an example of the present invention is described, but the present invention is not limited to this and can be variously modified.
(a1) The steps shown in the flow chart of Figure 4 need not be performed in the order as shown in Figure 4, and a predetermined one of the steps may be performed before or simultaneously with one of the steps which is different from the predetermined step.
(a2) In the above, it is described that the charging by the charger is started at a specification value of the charger (for example, 30 kW, 50 kW). However, the charging by the charger may be started at a value lower than the specification value (for example, 30 kW at the time when the specification value of charger is 50 kW).
(a3) The present invention is not limited to the control of charging power for an electric vehicle, and the like, and can be applied to the control of charging power for other storage batteries. For example, the present invention can also be applied to the control of charging power for a storage battery, such as a storage battery of an electronic device; a home storage battery; a backup storage battery such as a UPS; a large-scale storage battery which stores power generated by solar power generation, wind power generation, or the like.

### (Remarks)

The present description discloses the following matters:
1. A charging power control method for charging a storage battery in charging equipment provided with one or more chargers, wherein a maximum power value (hereinafter referred to as "limit value") usable for charging by a single charger, and power (hereinafter referred to as "requested power") originally desired to be used for charging the storage battery charging are set in advance, the charging power control method including steps of:
   A1: starting charging of a storage battery at a predetermined initial power set in advance,
   A2: measuring an effective value of power used by the storage battery being charged,
   A3: determining whether or not the measured effective value monotonically decreases,
   A4: a step in which, when the effective value monotonically decreases, the limit value and the value of the requested power are reset to a value which is equal to the effective value, or a valued which is higher than the effective value by a predetermined value and is lower than an initial value of the limit value or the requested power,
   A5: storing the reset limit value and the reset requested power,
   A6: thereafter, continuing the charging of the storage battery at the reset limit value,
   A7: performing charging (hereinafter referred to as "limited charging") at a limit value lower than the present requested power during charging of the storage battery, and
   A8: resuming charging, after the limited charging is finished, by setting the limit value to the stored value of the requested power.
2. The charging power control method described in the 1, in which the value of initial power at the time of starting the charging is a specification value determined in advance according to the performance of the charger.
3. The charging power control method described in one of the 1 and 2, in which the step of determining whether or not the effective value monotonically decreases is periodically performed at predetermined time intervals.
4. The charging power control method described in one of the 1 to 3, in which the steps from A2 to A5 are performed during charging after the limited charging is finished.
5. The charging power control method described in one of the 1 to 4, in which the storage battery is a storage battery mounted in an electric vehicle.
6. A charging power control system which includes one or more of chargers;
   a power controller for supplying power to the chargers, and a charging power control apparatus for controlling at least a part of the operation of the chargers, wherein a maximum power value (hereinafter referred to as "limit value") usable for charging by a single charger, and power (hereinafter referred to as "requested power") originally desired to be used for charging the storage battery during charging are set in advance,
   the charging power control apparatus including:
   B1: a determination processing unit which determines whether or not an effective value of power used by the storage battery being charged monotonically decreases,
   B2: a reset processing unit in which, when the effective value monotonically decreases, the limit value and the value of the requested power are reset to a value equal to the effective value, or a value which is higher than the effective value by a predetermined value and is lower than an initial value of the limit value or the requested power,
   B3: a storage processing unit which stores the reset limit value and the reset requested power in a storage device,
   B4: a charging restart processing unit which transmits, to the charger, an instruction such that, during charging of the storage battery, the charger performs charging (hereinafter referred to as "limited charging") at a limit value lower than the present requested power, and such that, after finish of the limited charging, the charger resumes charging by setting the limit value to the stored value of the requested power.
7. A computer program and a medium storing the computer program for use in a charging power control apparatus in a system including one or more of chargers, a power controller for supplying power to the chargers, and the charging power control apparatus for controlling at least a part of the operations of the charger, wherein a maximum power value (hereinafter referred to as "limit value") usable for charging by a single charger, and power (hereinafter referred to as "requested power") originally desired to be used for charging the storage battery at the time of charging are set in advance, the computer program making one or more computers function as
   C1: a determination processing unit which determines whether or not an effective value of power used by the storage battery being charged monotonically decreases,
   C2: a reset processing unit in which, when the effective value monotonically decreases, the limit value and the value of the requested power are reset to a value equal to the effective value, or a value which is higher than the effective value by a predetermined value and is lower than an initial value of the limit value or the requested power,
   C3: a storage processing unit which stores the reset limit value and the reset requested power in a storage device, and
   C4: a charging restart processing unit which transmits, to the charger, an instruction such that, during charging of the storage battery, the charger performs charging (hereinafter referred to as "limited charging") at a limit value lower than the present requested power, and such that, after finish of the limited charging, the charger resumes charging by setting the limit value to the stored value of the requested power.
8. A charger management apparatus which manages a plurality of chargers for charging storage batteries, in which the charger management apparatus is configured to:
   a: gather data representing an effective value of power used by the storage battery in a state in which the storage battery is charged by the charger, and data representing a maximum value of power (limit value) at which the charger can charge the storage battery, and
   b: reset, when the effective value decreases in a predetermined period, the maximum value to a value equal to the effective value or to a value that is higher than the effective value by a predetermined value and is lower than the initial value of the limit value.

### REFERENCE SIGNS LIST

1 POWER STORAGE CHARGING SYSTEM
10 CHARGING EQUIPMENT
15A TO 15B CHARGER
15A CONTROL UNIT
15B FEEDING CABLE
20 PCS
22 SYSTEM POWER
23 STORAGE BATTERY
24 SOLAR POWER GENERATION
30 CHARGING POWER CONTROL SERVER (CHARGING POWER CONTROL APPARATUS)
35 DISTRIBUTION NETWORK
36 NETWORK

## Claims

1. A charging power control method for charging a storage battery in charging equipment provided with one or more chargers, wherein a maximum power value (hereinafter referred to as "limit value") usable for charging by a single charger and power (hereinafter referred to as "requested power") originally desired to be used for charging the storage battery during charging the storage battery are set in advance, the charging power control method comprising steps of
A1: starting charging of a storage battery at a predetermined initial power set in advance,
A2: measuring an effective value of power used by the storage battery being charged,
A3: determining whether or not the measured effective value monotonically decreases,
A4: a step in which, when the effective value monotonically decreases, the limit value and the value of the requested power are reset to a value which is equal to the effective value, or a value which is higher than the effective value by a predetermined value and is lower than an initial value of the limit value or the requested power,
A5: storing the reset limit value and the reset requested power,
A6: thereafter continuing the charging of the storage battery at the reset limit value,
A7: performing charging (hereinafter referred to as "limited charging") at a limit value lower than the present requested power during charging of the storage battery, and
A8: resuming charging, after finish of the limited charging, by setting the limit value to the stored value of the requested power.

2. The charging power control method according to claim 1, wherein the value of initial power at the time of starting the charging is a specification value determined in advance according to the performance of the charger.

3. The charging power control method according to one of claim 1 and claim 2, wherein the step of determining whether or not the effective value monotonically decreases is periodically performed at predetermined time intervals.

4. The charging power control method according to one of claim 1 to claim 3, wherein the steps from A2 to A5 are performed during charging after the limited charging is finished.

5. The charging power control method according to one of claim 1 to claim 4, wherein the storage battery is a storage battery mounted in an electric vehicle.

6. A charging power control system which comprises one or more of chargers, a power controller for supplying power to the chargers, and a charging power control apparatus for controlling at least a part of the operation of the chargers, wherein a maximum power value (hereinafter referred to as "limit value") usable for charging by a single charger and power (hereinafter referred to as "requested power") originally desired to be used for charging the storage battery during charging are set in advance,
the charging power control apparatus comprising:
B1: a determination processing unit which determines whether or not an effective value of power used by the storage battery being charged monotonically decreases,
B2: a reset processing unit in which, when the effective value monotonically decreases, the limit value and the value of the requested power are reset to a value equal to the effective value, or a value which is higher than the effective value by a predetermined value and is lower than an initial value of the limit value or the requested power,
B3: a storage processing unit which stores the reset limit value and the reset requested power in a storage device, and
B4: a charging restart processing unit which transmits, to the charger, an instruction such that, during charging of the storage battery, the charger performs charging (hereinafter referred to as "limited charging") at a limit value lower than the present requested power, and such that, after finish of the limited charging, the charger resumes charging by setting the limit value to the stored value of the requested power.

7. A computer program for use in a charging power control apparatus in a system including one or more of chargers, a power controller for supplying power to the chargers, and the charging power control apparatus for controlling at least a part of the operation of the chargers, wherein a maximum power value (hereinafter referred to as "limit value") usable for charging by a single charger, and power (hereinafter referred to as "requested power") originally desired to be used for charging the storage battery at the time of charging are set in advance, the computer program making one or more computers function as
C1: a determination processing unit which determines whether or not an effective value of power used by the storage battery being charged monotonically decreases,
C2: a reset processing unit in which, when the effective value monotonically decreases, the limit value and the value of the requested power are reset to a value equal to the effective value, or a value which is higher than the effective value by a predetermined value and is lower than an initial value of the limit value or the requested power,
C3: a storage processing unit which stores the reset limit value and the reset requested power in a storage device, and
C4: a charging restart processing unit which transmits, to the charger, an instruction such that, during charging of the storage battery, the charger performs charging (hereinafter referred to as "limited charging") at a limit value lower than the present requested power, and such that, after finish of the limited charging, the charger resumes charging by setting the limit value to the stored value of the requested power.

8. A charger management apparatus configured to manage a plurality of chargers for charging storage batteries, wherein the charger management apparatus is configured to:
gather data representing an effective value of power used by the storage battery in a state in which the storage battery is charged by the charger, and data representing a maximum value of power (limit value) at which the charger can charge the storage battery, and
reset, when the effective value decreases in a predetermined period, the maximum value to a value equal to the effective value or to a value that is higher than the effective value by a predetermined value and is lower than the initial value of the limit value.
